# EUROPÄISCHE PATENTSCHRIFT

(11) **EP 3 818 274 B1**
(45) Veröffentlichungstag und Bekanntmachung des Hinweises auf die Patenterteilung: **20.04.2022**
(21) Anmeldenummer: 19736588.5
(22) Anmeldetag: 26.06.2019
(51) Int. Cl.: F16D 1/08

(54) **KUPPLUNG ZWISCHEN EINER WELLE UND EINEM GESCHLITZTEN HOHLWELLENBEREICH MIT EINEM GESCHLITZTEN KLEMMRING UND EINER TANGENTIAL WIRKENDEN SPANNSCHRAUBE**
COUPLING BETWEEN A SHAFT AND A SLOTTED HOLLOW SHAFT PART WITH A SPLIT CLAMPING RING AND A TANGENTIAL ACTING TENSION BOLT
ACCOUPLEMENT ENTRE UN ARBRE ET UNE PARTIE D'ARBRE CREUSE FENDUE AVEC UNE BAGUE DE SERRAGE FENDUE ET UNE VIS DE TENSION OPÉRANT TANGENTIEL

(30) Priorität: 03.07.2018 DE 102018005225
(43) Veröffentlichungstag der Anmeldung: 12.05.2021
(73) Patentinhaber: SEW-EURODRIVE GmbH & Co. KG, 76646 Bruchsal (DE)
(72) Erfinder: HALLER, Sascha, 76135 Karlsruhe (DE); SCHILLINGER, Jens, 76437 Rastatt (DE)
(86) Internationale Anmeldenummer: PCT/EP2019/025200
(87) Internationale Veröffentlichungsnummer: WO 2020/007504

(56) Entgegenhaltungen:
- DE-A1- 19 907 181
- DE-A1-102005 031 839
- DE-A1-102011 013 887
- DE-B3-102004 011 361
- DE-U1- 8 810 094

## Beschreibung

Die Erfindung betrifft eine Spannverbindung.

Aus der DE 10 2005 031 839 C5 ist gattungsgemäße Spannverbindung zwischen einer Welle und einer Hohlwelle bekannt.

**Aus der** DE 10 2011 013 887 A1 **ist eine Klemmkupplung zur drehfesten Verbindung zweier drehenden Teile, vorzugsweise Welle und Nabe, bekannt.**

**Aus der** DE 10 2016 221 310 A1 **ist eine Klemmkupplung bekannt.**

**Aus der** DE 10 2005 031 839 A1 **ist als nächstliegender Stand der Technik ein Klemmelement zur Verbindung einer Motorwelle mit einem Getriebe über eine Nabe bekannt.**

**Aus der** DE 10 2004 011 361 B3 **ist eine Verbindung einer geschlitzten Hohlwelle mit einer Welle oder einem Gegenstück bekannt.**

**Aus der** DE 199 07 181 A1 **ist eine Verbindung einer geschlitzten Hohlwelle, Hohlachse oder Hülse mit einem eingreifenden Gegenstück bekannt.**

**Aus der** DE 10 2011 013 887 A1 **ist eine Klemmkupplung zur drehfesten Verbindung zweier drehender Teile, vorzugsweise Welle und Nabe, bekannt.**

**Aus der** DE 88 10 094 U1 **ist eine Steckverbindung für zwei Wellen bekannt.**

Der Erfindung liegt daher die Aufgabe zugrunde, eine Spannverbindung für einen Antrieb weiterzubilden, wobei eine hohe Dynamik des Antriebs erreichbar sein soll.

Erfindungsgemäß wird die Aufgabe bei der Spannverbindung nach den in Anspruch 1 angegebenen Merkmalen gelöst.

Wichtige Merkmale der Erfindung bei der Spannverbindung sind, dass sie
- einen Hohlwellenabschnitt,
- eine in den Hohlwellenabschnitt zumindest teilweise eingeführte Welle,
- eine Schraube, insbesondere Spannschraube, und
- einen Spannring
aufweist,
wobei der Hohlwellenabschnitt einen Axialschlitz, insbesondere einen durch den Hohlwellenabschnitt radial durchgehenden Axialschlitz, aufweist,
wobei die Schraube ein Schraubgewinde und einen Schraubenkopf aufweist, der einen größten Durchmesser aufweist, welcher größer ist als der größte Durchmesser des Schraubgewindes,
wobei der Hohlwellenabschnitt eine Abflachung, also einen Bereich mit im Vergleich zur radialer Wandstärke außerhalb des Bereichs verringerter radialer Wandstärke und/oder mit im Vergleich zur Wandstärke außerhalb des Bereichs verringertem Außenradius, aufweist,
wobei die Schraube, insbesondere mit ihrem Schraubgewinde, zumindest teilweise an der Abflachung anliegt,
wobei die Schraube beabstandet ist von der Welle, insbesondere von der Mantelfläche der Welle.

Von Vorteil ist dabei, dass die Schraube mittels der Abflachung den Spannring verdrehsichert. Denn die Schraube liegt an der Abflachung, also an einer radialen Vertiefung, an. Außerdem ist die Schraube in Bohrungen des Spannrings aufgenommen und daher formschlüssig mit dem Spannring verbunden.

Die Spannverbindung verbindet die Welle mit dem Hohlwellenabschnitt kraftschlüssig, insbesondere eine Rotorwelle mit einer Adapterwelle, welche ein eintreibendes Verzahnungsteil eines Getriebes antriebt. Erfindungsgemäß ist eine möglichst hohe Dynamik des Antriebs erreichbar, weil die Spannverbindung eine geringe Masse und ein geringes Trägheitsmoment aufweist.

Bei einer vorteilhaften Ausgestaltung weist die Spannverbindung eine Madenschraube auf zur axialen Sicherung des Spannrings auf dem Hohlwellenabschnitt, wobei die Madenschraube in einer radial gerichteten Gewindebohrung schraubverbunden ist.

Von Vorteil ist dabei, dass die Madenschraube in die Gewindebohrung eingeschraubt ist und somit an den Hohlwellenabschnitt anpressbar ist, so dass die axiale Sicherung des Spannrings mittels der Madenschraube gewährleistbar ist.

Bei einer vorteilhaften Ausgestaltung umfasst der von der Abflachung in Umfangsrichtung überdeckte Bereich, insbesondere Umfangswinkelbereich, den von dem Axialschlitz überdeckten Umfangswinkelbereich oder überlappt zumindest mit ihm,

insbesondere wobei der von dem Axialschlitz überdeckte axiale Bereich den von der Abflachung überdeckten axialen Bereich umfasst oder zumindest mit ihm überlappt. Von Vorteil ist dabei, dass die Stabilität des Hohlwellenabschnitts nur geringfügig verringert ist mittels der Abflachung, weil sie im Bereich des Schlitzes angeordnet ist.

Bei einer vorteilhaften Ausgestaltung ist am Spannring eine Ausnehmung, insbesondere zum Auswuchten, angeordnet, welche von der Madenschraube und von der Schraube in Umfangsrichtung beabstandet ist. Von Vorteil ist dabei, dass Unwucht verminderbar oder vermeidbar ist.

Bei einer vorteilhaften Ausgestaltung ist ein äußere Rand der Auflagefläche des Spannrings durch den axialen Verlauf des größten Radialabstandes des Spanrings definiert, wobei die radiale Außenkontur radial derart klein gewählt ist, dass die Bereiche des axialen Verlaufs dem äußersten von der Unterkante des Schraubenkopfes noch berührten Bereich der Auflagefläche sehr nahe kommen und an mehreren axialen Positionen tangieren oder mit einem Abstand von weniger als fünf Zehntel Millimeter nahe kommen.

Von Vorteil ist dabei, dass möglichst wenig Masse im radial äußeren Bereich vorhanden ist. Denn zum Trägheitsmoment des Spannrings trägt der äußere Bereich einen sehr hohen Anteil bei. Durch Minimierung dieses äußeren Bereichs ist also ein geringes Trägheitsmoment erreichbar.

Die Spannverbindung verbindet die Welle mit dem Hohlwellenabschnitt kraftschlüssig, insbesondere eine Rotorwelle mit einer Adapterwelle, welche ein eintreibendes Verzahnungsteil eines Getriebes antriebt. Erfindungsgemäß ist eine möglichst hohe Dynamik des Antriebs erreichbar, weil die Spannverbindung eine geringe Masse und ein geringes Trägheitsmoment aufweist. Die Außenkontur des Spannrings ist also derart gewählt, dass die Außenkontur der Auflagefläche formgebend ist. Die radial äußere Kontur der Auflagefläche definiert also die radial äußere Form des Rotationskörpers.

Bei der vorteilhaften Ausgestaltung mit einem Abstand von weniger als fünf Zehntel Millimeter ist von Vorteil, dass Fertigungs- und Sicherheitstoleranzen berücksichtigt sind. Somit ist diejenige Massenreduktion und Trägheitsmomentreduktion erreichbar, welche noch fertigbar ist und Sicherheit gewährleistet.

Erfindungsgemäß weist der axiale Verlauf des größten Radialabstands des Spannrings einen konstanten Bereich auf, an welchen sich beidseitig jeweils ein gerundeter Bereich, insbesondere Kreisabschnitt, anschließt, an dessen vom konstanten

Bereich abgewandter Seite sich jeweils ein linearer Bereich, insbesondere ein Bereich, bei dem der größte Radialabstand proportional zur axialen Position verläuft, anschließt. Von Vorteil ist dabei, dass eine einfache Herstellung ermöglicht ist, da die Konturbereiche mit konstanten, linearen oder kreisförmigen Verläufen einfach programmierbar sind in derjenigen Werkzeugmaschine, mit welcher der Spannring herstellbar ist, insbesondere endbearbeitbar ist.

Bei einer vorteilhaften Ausgestaltung ist der Spannring ein Rotationskörper, dessen radial äußere Oberfläche mittels des axialen Verlaufs des größten Radialabstands vorgegeben ist, wobei der Rotationskörper Ausnehmungen aufweist. Von Vorteil ist dabei, dass eine einfache Herstellung als Rotationskörper ermöglicht ist. Somit ist auch Unwucht vermeidbar.

Bei einer vorteilhaften Ausgestaltung weist der Spannring einen radial und axial durchgehenden Schlitz auf,
wobei das Schraubgewinde zumindest teilweise in eine auf der von der Auflagefläche abgewandten Seite des Schlitzes des Spannrings angeordneten Gewindebohrung eingeschraubt ist. Von Vorteil ist dabei, dass auf der ersten Seite des Schlitzes die Auflagefläche angeordnet ist, an welcher sich der Schraubenkopf abstützt und auf der anderen Seite des Schlitzes die Gewindebohrung angeordnet ist, in welche das Schraubengewinde eingeschraubt ist. Die Auflagefläche ist eben und vorzugsweise parallel zum Schlitz, insbesondere zur Schlitzebene.

Wichtige Merkmale bei dem Antrieb sind, dass er eine Spannverbindung aufweist, wobei die Welle eine Rotorwelle eines Elektromotors ist und der Hohlwellenabschnitt drehfest mit dem eintreibenden Verzahnungsteil eines vom Elektromotor angetriebenen Getriebes verbunden ist.

Von Vorteil ist dabei, dass der Hohlwellenabschnitt ein Wellenbereich einer Adapterwelle ist, wobei der zugehörige Adapter zwischen Elektromotor und Getriebe angeordnet ist und drehfest mit dem eintreibenden Verzahnungsteil, insbesondere Ritzel, des Getriebes verbunden ist.

Das Trägheitsmoment des Spannrings ist erfindungsgemäß gering. Somit ist der Antrieb mit hoher Dynamik betreibbar.

Weitere Vorteile ergeben sich aus den Unteransprüchen.

Die Erfindung wird nun anhand von schematischen Abbildungen näher erläutert:
In den Figuren 1 bis 6 ist ein erstes, nicht erfindungsgemäßes Ausführungsbeispiel dargestellt.
In den Figuren 7 bis 20 ist ein zweites, erfindungsgemäßes Ausführungsbeispiel dargestellt.

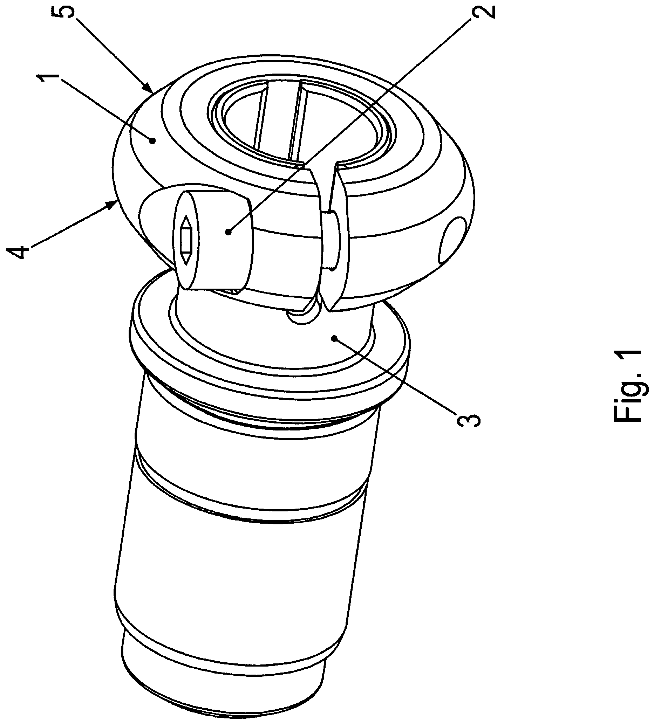

In der Figur 1 ist eine Schrägansicht einer ersten, nicht erfindungsgemäßen Spannverbindung in Schrägansicht in einer ersten Blickrichtung gezeigt.

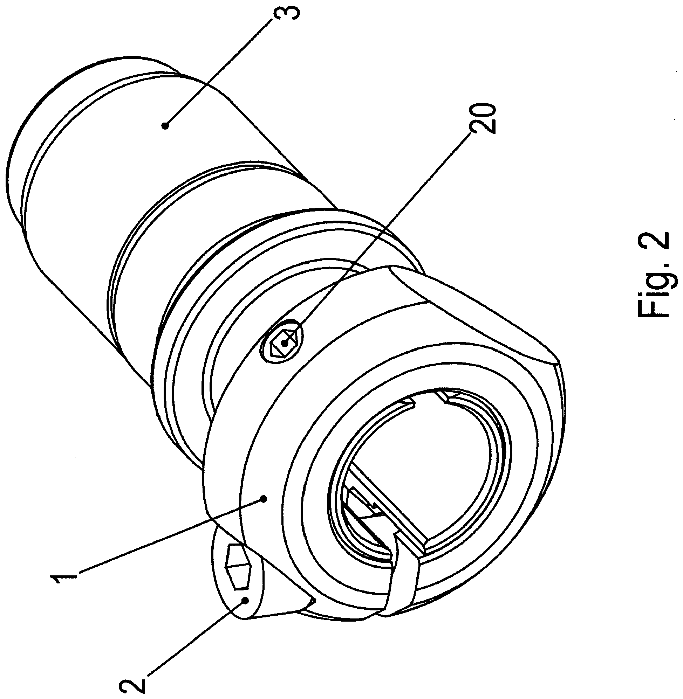

In der Figur 2 ist die erste Spannverbindung aus einer anderen Blickrichtung gezeigt.

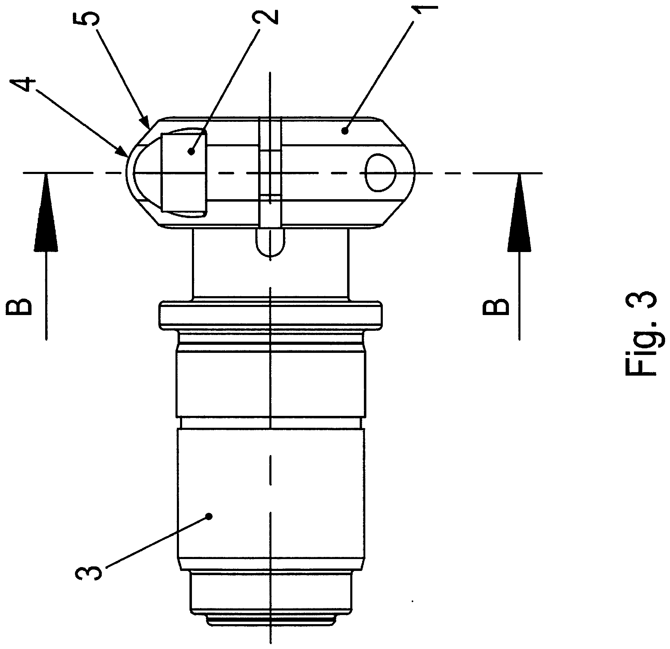

In der Figur 3 ist eine Seitenansicht der ersten Spannverbindung mit Blickrichtung senkrecht zur Schraubenachse dargestellt.

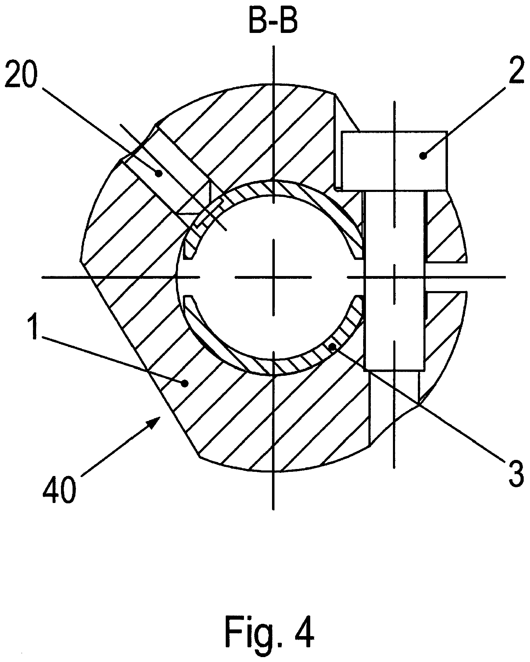

In der Figur 4 ist ein zugehöriger Querschnitt gezeigt.

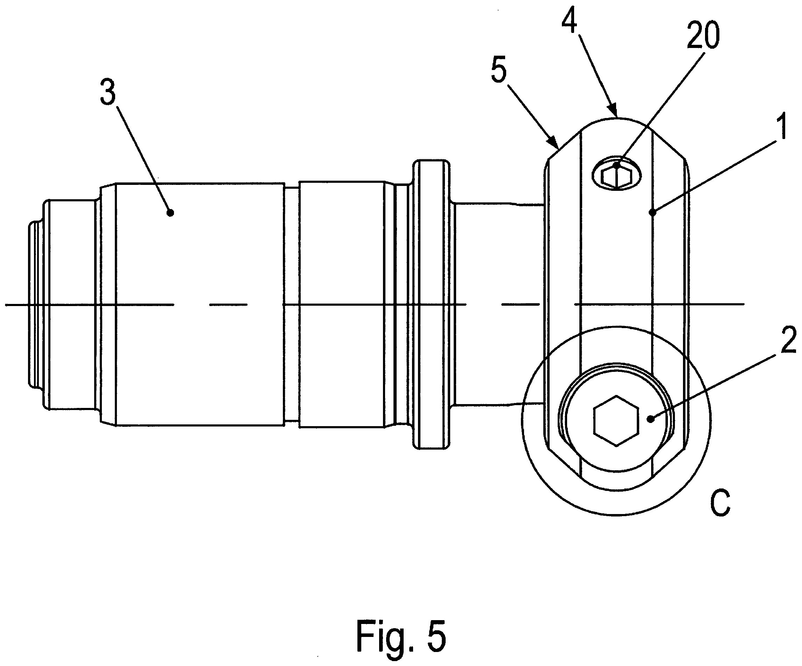

In der Figur 5 ist eine weitere Seitenansicht der ersten Spannverbindung mit Blickrichtung parallel zur Schraubenachse dargestellt.

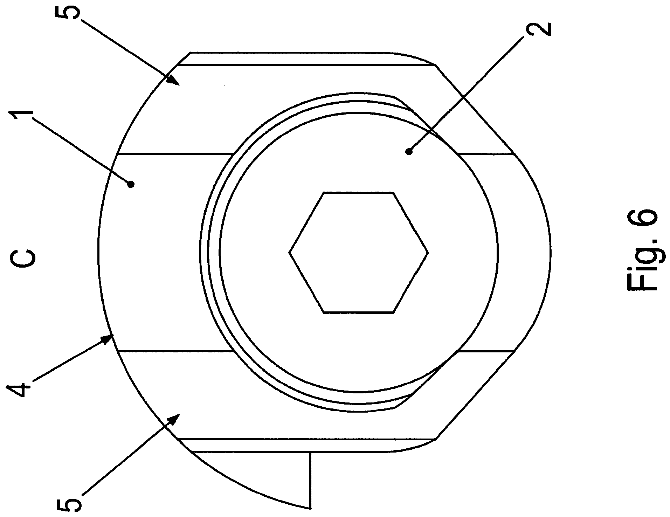

In der Figur 6 ist ein Ausschnitt der Figur 5 vergrößert dargestellt.

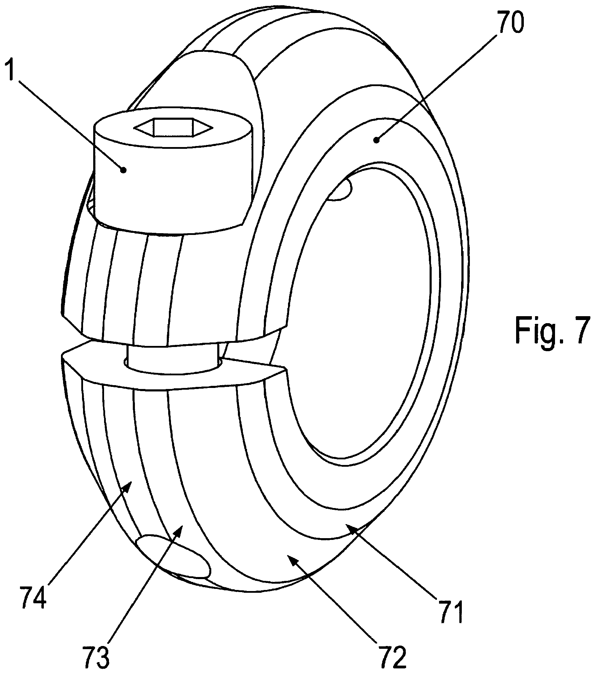

In der Figur 7 ist ein zweiter Spannring der zweiten, erfindungsgemäßen Spannverbindung in Schrägansicht dargestellt.

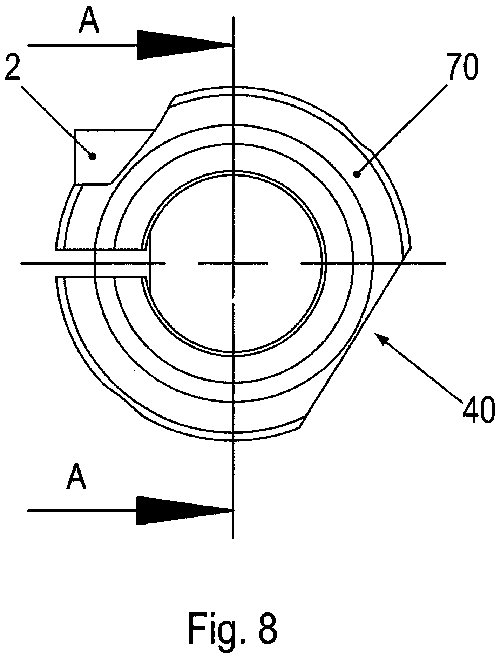

In der Figur 8 ist eine zugehörige Seitenansicht dargestellt.

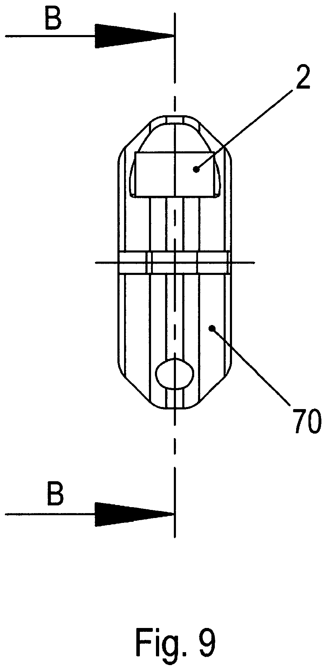

In der Figur 9 ist eine zugehörige Vorderansicht dargestellt.

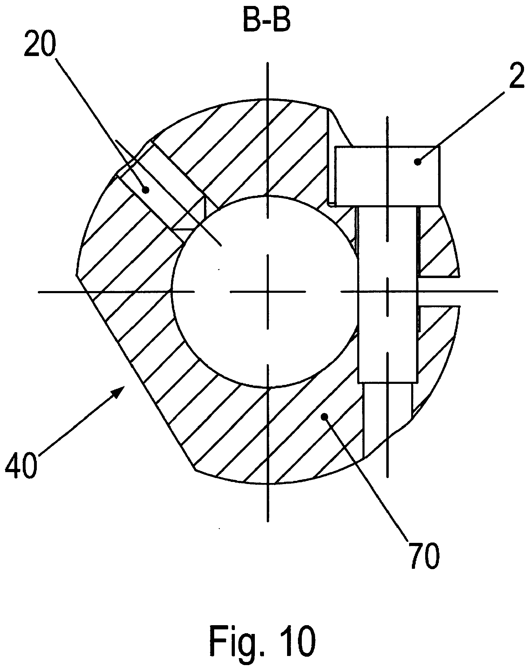

In der Figur 10 ist ein Querschnitt des zweiten Spannrings dargestellt.

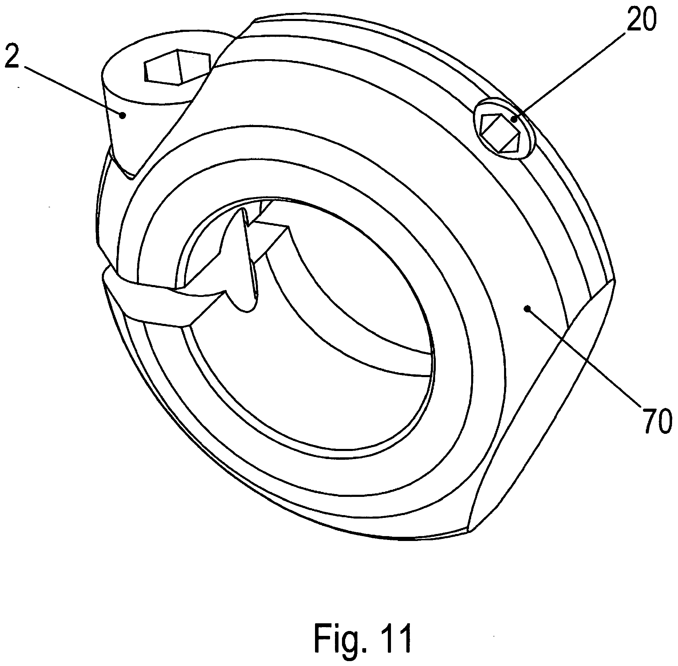

In der Figur 11 ist der zweite Spannring aus einer anderen Blickrichtung dargestellt. zweite Spannring

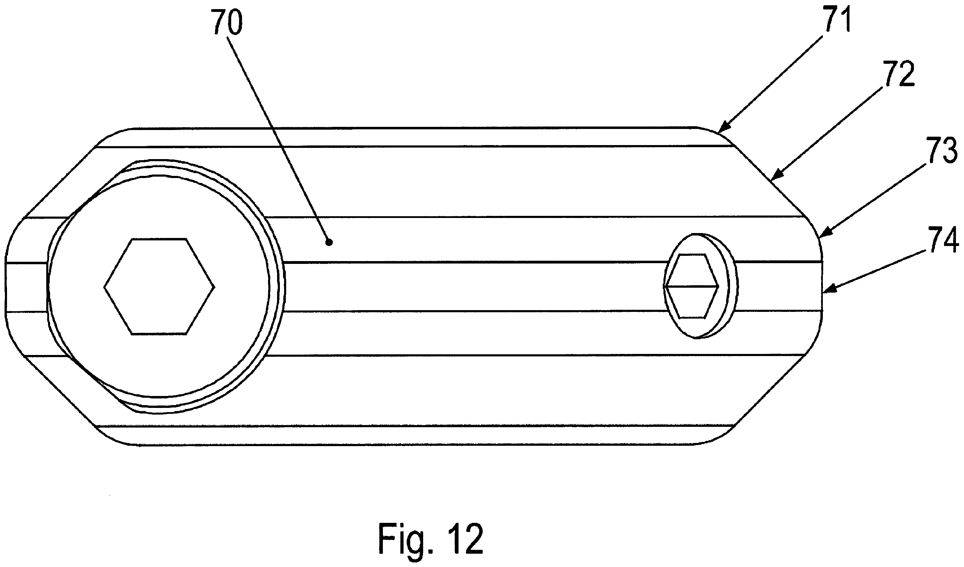

In der Figur 12 ist der in Draufsicht dargestellt.

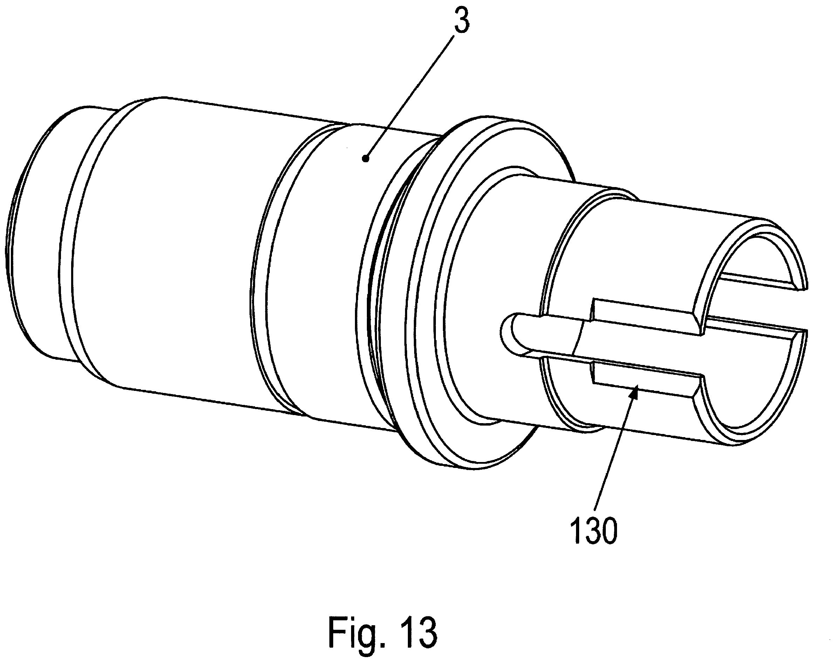

In der Figur 13 ist eine Adapterwelle in Schrägansicht dargestellt,

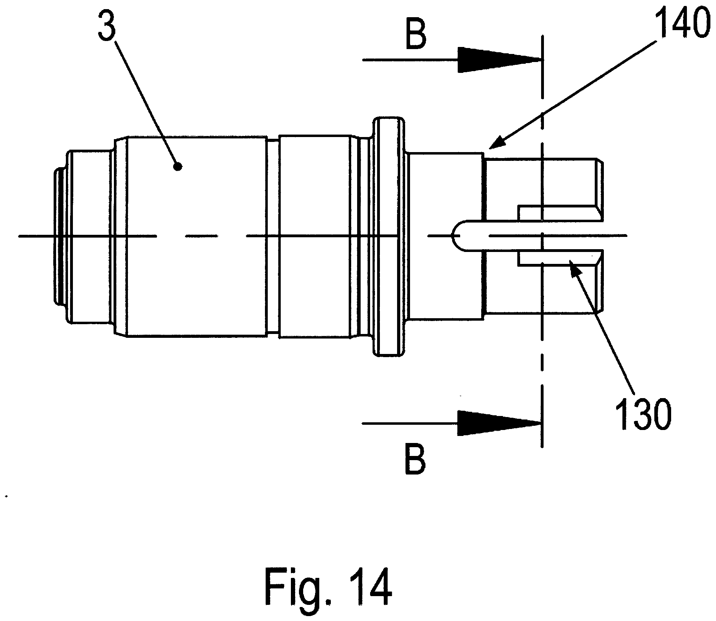

In der Figur 14 ist eine zugehörige Seitenansicht dargestellt.

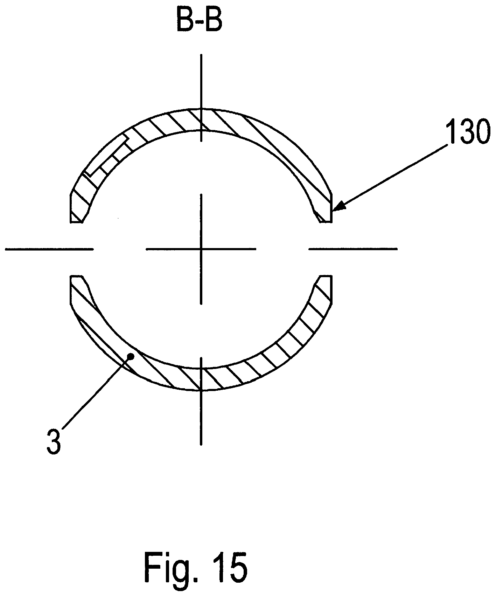

In der Figur 15 ein Querschnitt der Adapterwelle gezeigt.

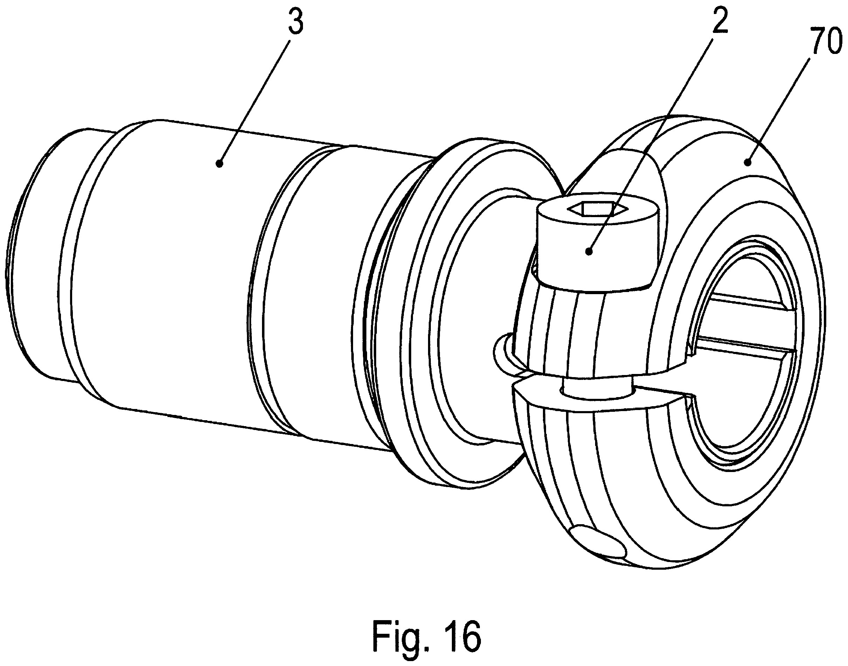

In der Figur 16 ist die zweite Spannverbindung in Schrägansicht dargestellt.

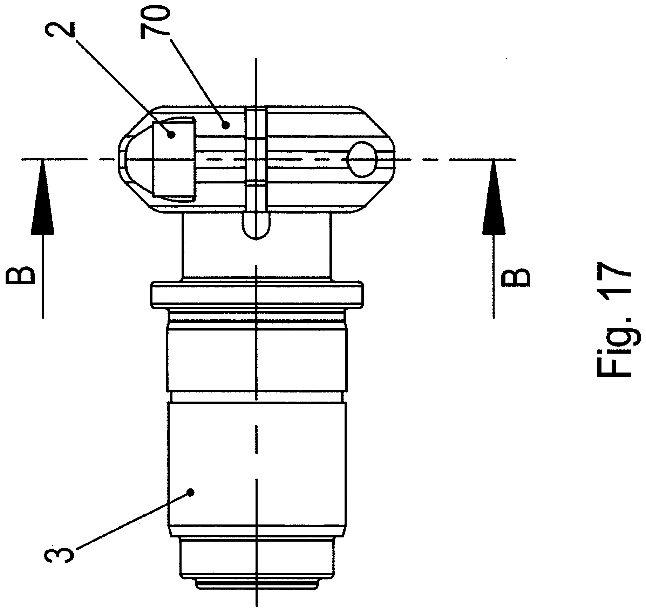

In der Figur 17 ist eine zugehörige Seitenansicht gezeigt.

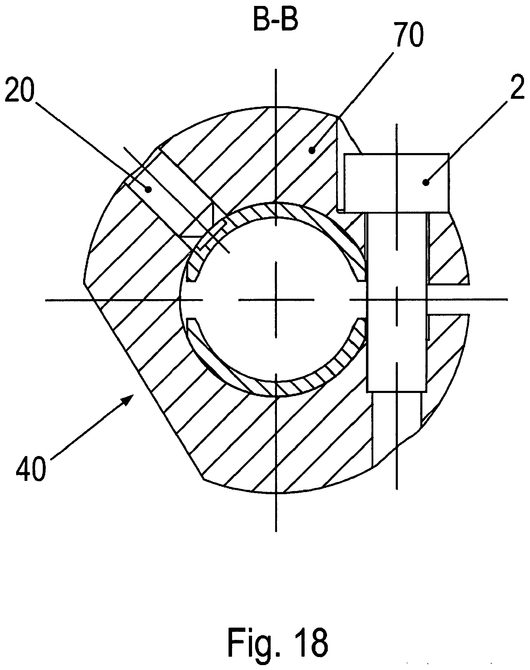

In der Figur 18 ist ein zugehörigerer Querschnitt dargestellt.

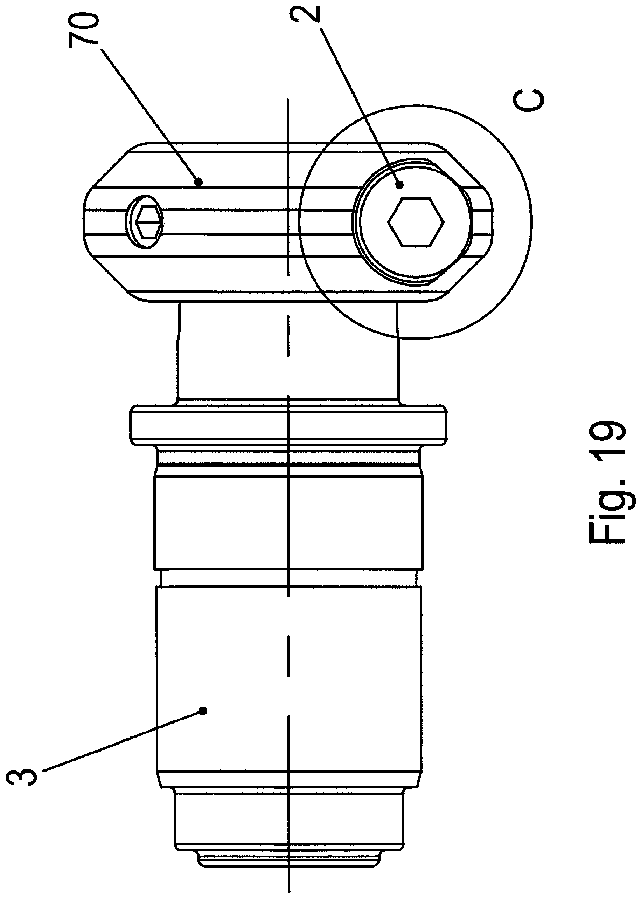

In der Figur 19 ist eine Seitenansicht aus einer anderen Blickrichtung als Figur 17 dargestellt.

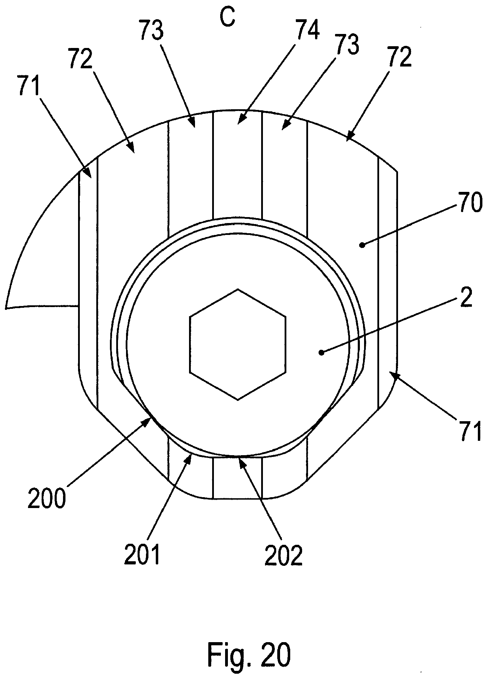

In der Figur 20 ist ein vergrößerter Ausschnitt dargestellt.

Wie in den Figuren 1 bis 6 dargestellt, weist die erste, nicht erfindungsgemäße Spannverbindung eine Adapterwelle mit Hohlwellenabschnitt 3 auf.

Im Bereich des Hohlwellenabschnitts 3 sind axial gerichtete Schlitze angeordnet, welche nach außen münden, also nach außen offen ausgeführt sind. Diese Schlitze sind radial durchgehend ausgeführt. Insbesondere sind zwei Schlitze vorgesehen, welche sich diametral am Hohlwellenabschnitt gegenüberliegend angeordnet sind.

Auf diesen geschlitzten Hohlwellenabschnitt 3 der Welle, insbesondere Adapterwelle, ist ein Spannring 1 in axialer Richtung aufgeschoben.

Der Spannring 1 weist an seinem Umfang einen axial und radial durchgehenden Schlitz auf, welcher in Umfangsrichtung weniger ausgedehnt ist als in radialer und/oder in axialer Richtung.

Eine Schraube 2, insbesondere Spannschraube, ist durch eine Bohrung geführt, welche senkrecht durch die Schlitzebene hindurchragt, also die Schraubenachse an der Umfangsposition der Schlitzmitte tangential ausgerichtet ist.

In Umfangsrichtung beidseitig des Schlitzes sind Bohrungen im Spannring angeordnet, wobei die erste Bohrung in eine zum Schlitz parallel ausgerichtete Fläche, insbesondere Auflagefläche für den Schraubenkopf der Schraube 2, eingebracht ist.

Diese erste Bohrung mündet in den Schlitz und die zweite Bohrung ist auf der von der ersten Bohrung abgewandten Seite angeordnet und als Gewindebohrung ausgeführt.

Das Schraubgewinde der Schraube 2 ist in diese Gewindebohrung eingeschraubt, so dass der Schraubenkopf auf die Auflagefläche drückt und auf diese Weise der Spannring 1 spannbar, insbesondere aufschrumpfbar auf den Hohlwellenabschnitt 3 ist.

Eine in den Figuren nicht gezeigte Welle ist in den Hohlwellenabschnitt 3 zumindest teilweise eingesteckt. Diese Welle überdeckt also einen axialen Bereich, welcher den vom Spannring 1 überdeckten axialen Bereich umfasst.

Somit ist durch Betätigen der Schraube 2, also Einschrauben in die Gewindebohrung, der Hohlwellenabschnitt 3 kraftschlüssig mit der Welle verbindbar.

Der Ringquerschnitt des Spannrings 1 ist nicht rechteckförmig, sondern an seiner Außenseite gerundet ausgeführt. Vom gedachten rechtecksförmigen Querschnitt ist also ausgehend vom größten Durchmesser dieses gedachten Rings Material weggenommen, so dass ein gerundeter Bereich 4 und eine sich daran anschließende Fase 5, insbesondere gerade und/oder lineare Fase 5, die äußere Oberfläche bilden.

Wie in Figur 4 ersichtlich, berührt der zum größten Außendurchmesser gehörige Kreis auf der Oberfläche des Spannrings 1 den äußeren Rand der Auflagefläche.

Wie aus Figur 5 und 6 ersichtlich, berührt der gerundete Bereich 4 einen Kreisabschnitt der Auflagefläche. Dies ist insbesondere aus dem unteren Bereich der Figur 6 ersichtlich. Ebenso sind die Fasen 5 direkt an die kreisrunde Auflagefläche angelegt.

Insgesamt ist also die radial äußere Kontur des Spannrings 1 derart gewählt, dass die Auflagefläche an ihrem äußeren Rand berührt wird und dieser Rand kreisförmig ist entsprechend dem Durchmesser des Schraubenkopfes der Schraube 2.

Der zylindrisch geformte Schraubenkopf liegt also auf der Auflagefläche mit seiner Unterkante auf. Der gerundete Bereich 4 und die Fase 5 berühren daher diesen äußersten von der Unterkante des Schraubenkopfes noch berührten Bereich der Auflagefläche.

Bei der praktischen Ausführung des Spannrings ist noch ein Aufmaß vorhanden, so dass der gerundete Bereich 4 und/oder die Fase 5 einen Abstand zur Unterkante des Schraubenkopfes zwischen einem und fünf Zehntel Millimeter aufweisen. Die Auflagefläche ist also unwesentlich größer ausgeführt, so dass noch ein Sicherheitsabstand eingehalten ist, insbesondere Sicherheit gegen Bruch.

Der gerundete Bereich 4 ist näherungsweise als Abschnitt eines modifizierten Torus mit Ellipsenförmigem Ringquerschnitt ausführbar. Daran schließen sich dann axial beidseitig die fasen 5 an. Bevorzugt sind diese Fasen linear ausgeführt und somit als jeweils ein Kreiskegelstumpf.

Die beiden Kegelstümpfe sind an den Abschnitt des modifizierten Torus jeweils stetig und/oder differenzierbar, insbesondere also glatt, angeschlossen. Der Spannring ist dabei symmetrisch zu derjenigen Ebene ausgeführt, welche den größten Außendurchmesser des Spannrings enthält, insbesondere also durch die axiale Mitte des Spannrings geht. Die axiale Richtung ist dabei parallel zur Normalenrichtung dieser Ebene.

Wie in Figur 4 ersichtlich, ist eine Madenschraube 20 in eine radial gerichtete, radial durchgehende Gewindebohrung eingeschraubt, wobei die Madenschraube 20 auf den Hohlwellenabschnitt 3 drückt. Auf diese Weise ist eine axiale Sicherung erreicht.

Die Schraube 2 liegt an einer am Schlitz des Hohlwellenabschnitts 3 sich anschließenden Abflachung 130 des Hohlwellenabschnitts 3 an.

Der auch in den Figuren 13 und 14 näher dargestellte Hohlwellenabschnitt 3 des ersten und zweiten Ausführungsbeispiels ist gleichartig ausgeführt, da hier jeweils dieselbe Welle verwendet ist.

Wie aus Figur 13 und 14 ersichtlich, ist der Hohlwellenabschnitt 3 in dem von der Abflachung 130 in Umfangsrichtung überdeckten Umfangswinkelbereich mit einer nicht konstanten Wandstärke ausgeführt, so dass die Schraube 2 - wie in Figur 4 gezeigt - in den vom Hohlwellenabschnitt 3 radial überdeckten Bereich eindringt, da sie tangential an der Abflachung, also an dem Hohlwellenabschnitt 3, anliegt.

Auf diese Weise ist der Spannring 1 mittels der Schraube 2 an der Abflachung 130 des Hohlwellenabschnittes 3 in Umfangsrichtung verdrehgesichert.

Die Abflachung 130 ist bis zur Schlitzmündung, also zum axialen Ende des Hohlwellenabschnitts 3 ausgeführt. Daher ist der Spannring 1 zusammen mit der Schraube 2 bei der Herstellung auf den Hohlwellenabschnitt 3 aufschiebbar. Die Schraube 2 wird dann erst nach dem Aufschieben weiter eingeschraubt, um die kraftschlüssige Verbindung zu bewirken.

Wie in den Figuren 13 bis 15 deutlich gezeigt, ist der Schlitz 130 des Hohlwellenabschnitts 3 axial länger ausgeführt als die Abflachung 130. Der von der Abflachung 130 axial überdeckte Bereich ist also in dem von dem Schlitz in axialer Richtung überdeckten axialen Bereich enthalten oder von diesem umfasst.

Als axialer Anschlag für den Spannring 1 weist der Hohlwellenabschnitt 3 einen Absatz auf, an welchem der Spannring 3 mit seiner Seitenfläche anliegt. Figur 14 zeigt diesen Absatz.

Diametral gegenüberliegende zur Schraube 2 ist eine Materialrücknahme, also Ausnehmung 40, ausgeführt, so dass der Spannring 2 samt Schraube 2 möglichst wenig Unwucht aufweist, also ausgewuchtet ist.

Die Madenschraube 20 zur axialen Sicherung ist in Umfangsrichtung von dem von der Schraube 2 überdeckten Umfangswinkelbereich beabstandet, insbesondere um mehr als 70°.

Die Madenschraube 20 zur axialen Sicherung ist in Umfangsrichtung von dem von der Ausnehmung 40 überdeckten Umfangswinkelbereich beabstandet, insbesondere um mehr als 30°.

Im Unterschied zum ersten Ausführungsbeispiel ist bei dem in den Figuren 16 bis 20 gezeigten Ausführungsbeispiel der Spannring 70 anders geformt als der Spannring 1 des ersten Ausführungsbeispiels. Die Welle nach Figur 13 bis 15 wird bei beiden Ausführungsbeispielen gleichartig verwendet.

Wie in Figur 16 und Figur 20 deutlich gezeigt, weist der Spannring 70 mittig, also im Bereich der Symmetrieebene, einen ebenen Verlauf 74 auf, ist also hohlzylindrisch ausgebildet. Axial beidseitig schließt sich daran jeweils ein gerundeter Verlauf 73 an, insbesondere also ein Kreisringabschnitt, und daran ein wiederum eine gerade Fase 72, also ein Kreiskegelstumpf.

Nach axial außen ist daran ein weiterer gerundeter Bereich 71 angeschlossen, also wiederum ein Kreisringabschnitt.

Zwar kommen diese Bereiche der Auflagefläche des Schraubenkopfes sehr nahe, jedoch sind Abstände hierzu vorhanden. Im ebenen Verlauf 74 liegt nur ein tangentialer Berührbereich 202 vor.

Ein tangentialer Berührbereich 200 ist auch zwischen Fase 72 und Auflagefläche des Schraubenkopfes vorhanden.

Jedoch ist ein deutlich erkennbarer Überstand 201 zwischen dem gerundeten Bereich 73 und der Auflagefläche erkennbar.

Vorteil bei der Herstellung dieser Ausführung nach Figur 16 bis 20 ist die einfache Fertigung, da nur Kreisradien und gerade Fasen notwendig sind, also keine komplizierten Freiformen.

Erfindungsgemäß ist die Spannverbindung also mit Spannring und Schraube ausgeführt, wobei der Schraubenkopf der Schraube auf einer ebenen Auflagefläche am Spannring anliegt. Die radiale Außenkontur des Spannrings ist radial derart möglichst klein gewählt, dass der durch die radiael Außenkontur defininerte Oberflächenbereich des Spannrings die Auflagefläche Inienhaft oder zumindest an mehreren Stellen berührt. Berührung ist dabei nur mit einer Genauigkeit von fünf Zehntel Millimeter definiert. Die Schraube liegt an einer Abflachung des Hohlwellenabschnitts an, so dass die Abflachung zusammen mit der Schraube die axiale Sicherung des Spannrings an dem Hohlwellenabschnitt bewirkt. Bei weiteren erfindungsgemäßen Ausführungsbeispielen wird die Ausnehmung 40 statt durch einen kreissekantenförmigen Abschnitt gemäß Figur 18 bevorzugt durch eine oder mehrere, axiale oder radiale Bohrungen.

Bei weiteren erfindungsgemäßen Ausführungsbeispielen wird statt des Absatzes in Figur 14 als axialer Anschlag das Ende der Abflachung beim Aufschieben des Spannrings 1 auf den Hohlwellenbereich 3 als axialer Anschlag für den Spannring 1 verwendet, da an diesem Ende die Schraube 2 in axialer Richtung an dem Ende der Abflachung, also an dem Bereich zunehmender Wandstärke des Hohlwellenabschnitts 3, anliegt.

### Bezugszeichenliste

1 Spannring
2 Schraube
3 Hohlwellenabschnitt, insbesondere einer Adapterwelle
4 gerundeter Verlauf
5 gerade, insbesondere lineare, Fase
20 Madenschraube
40 Ausnehmung
70 Spannring
71 gerundeter Verlauf
72 gerade, insbesondere lineare, Fase
73 gerundeter Verlauf
74 ebener Verlauf
130 Abflachung
140 Absatz
200 tangentialer Berührbereich zwischen Fase 72 und Auflagefläche des Schraubenkopfes
201 Überstand
202 tangentialer Berührbereich zwischen ebenem Verlauf 74 und Auflagefläche des Schraubenkopfes

## Patentansprüche

1. Spannverbindung, aufweisend
- einen Hohlwellenabschnitt (3),
- eine in den Hohlwellenabschnitt (3) zumindest teilweise eingeführte Welle,
- eine Schraube (2), insbesondere Spannschraube, und
- einen Spannring (70),
wobei die Schraube (2) ein Schraubgewinde und an einer ebenen Auflagefläche des Spannrings (70) anliegenden Schraubenkopf aufweist, der einen größten Durchmesser aufweist, welcher größer ist als der größte Durchmesser des Schraubgewindes,
**wobei** der Hohlwellenabschnitt (3) eine Abflachung (130), also einen Bereich mit im Vergleich zur radialer Wandstärke außerhalb des Bereichs verringerter radialer Wandstärke und/oder mit im Vergleich zur Wandstärke außerhalb des Bereichs verringertem Außenradius, aufweist,
wobei die Schraube (2), insbesondere mit ihrem Schraubgewinde, zumindest teilweise an der Abflachung (130) anliegt,
wobei die Schraube (2) beabstandet ist von der Welle, insbesondere von der Mantelfläche der Welle,
**dadurch gekennzeichnet, dass**
der Hohlwellenabschnitt (3) einen Axialschlitz, insbesondere einen durch den Hohlwellenabschnitt radial durchgehenden Axialschlitz, aufweist, und der axiale Verlauf (71-74) des größten Radialabstands des Spannrings (70) einen konstanten Bereich (74) aufweist, an welchen sich beidseitig jeweils ein gerundeter Bereich (73) insbesondere Kreisabschnitt, anschließt, an dessen vom konstanten Bereich (74) abgewandter Seite sich jeweils ein linearer Bereich (72), bei dem der größte Radialabstand proportional zur axialen Position verläuft, anschließt.

2. Spannverbindung nach Anspruch 1,
**dadurch gekennzeichnet, dass**
die Spannverbindung eine Madenschraube (20) aufweist zur axialen Sicherung des Spannrings (70) auf dem Hohlwellenabschnitt (3),
wobei die Madenschraube (20) in einer radial gerichteten Gewindebohrung angeordnet ist.

3. Spannverbindung nach Anspruch 1 oder 2,
**dadurch gekennzeichnet, dass**
der von der Abflachung (130) in Umfangsrichtung überdeckte Bereich, insbesondere Umfangswinkelbereich, den von dem Axialschlitz überdeckten Umfangswinkelbereich umfasst oder zumindest mit ihm überlappt, insbesondere wobei der von dem Axialschlitz überdeckte axiale Bereich den von der Abflachung (130) überdeckten axialen Bereich umfasst oder zumindest mit ihm überlappt.

4. Spannverbindung nach mindestens einem der vorangegangenen Ansprüche 2 und 3,
**dadurch gekennzeichnet, dass** am Spannring (70) eine Ausnehmung (40), insbesondere zum Auswuchten, angeordnet ist, welche von der Madenschraube (20) und von der Schraube (2) in Umfangsrichtung beabstandet ist.

5. Spannverbindung nach mindestens einem der vorangegangenen Ansprüche,
**dadurch gekennzeichnet, dass** ein äußere Rand der Auflagefläche des Spannrings (70) durch den axialen Verlauf des größten Radialabstandes des Spanrings (70) definiert ist, wobei die radiale Außenkontur radial derart klein gewählt ist, dass die Bereiche (71-74) des axialen Verlaufs dem äußersten von der Unterkante des Schraubenkopfes noch berührten Bereich der Auflagefläche sehr nahe kommen und an mehreren axialen Positionen (200, 201) tangieren oder mit einem Abstand von weniger als fünf Zehntel Millimeter nahe kommen.

6. Spannverbindung nach mindestens einem der vorangegangenen Ansprüche,
**dadurch gekennzeichnet, dass** der Spannring (70) ein Rotationskörper ist, dessen radial äußere Oberfläche mittels des axialen Verlaufs (71-74) des größten Radialabstands vorgegeben ist, wobei der Rotationskörper Ausnehmungen (40) aufweist.

7. Spannverbindung nach mindestens einem der vorangegangenen Ansprüche,
**dadurch gekennzeichnet, dass** der Spannring (70) einen radial und axial durchgehenden Schlitz aufweist, wobei das Schraubgewinde zumindest teilweise in eine auf der von der Auflagefläche abgewandten Seite des Schlitzes des Spannrings (70) angeordneten Gewindebohrung eingeschraubt ist.

8. Antrieb, aufweisend eine Spannverbindung nach mindestens einem der vorangegangenen Ansprüche,
**dadurch gekennzeichnet, dass**
die Welle eine Rotorwelle eines Elektromotors ist und der Hohlwellenabschnitt (3) drehfest mit dem eintreibenden Verzahnungsteil eines vom Elektromotor angetriebenen Getriebes verbunden ist.

## Claims

1. A clamping connection having
- a hollow shaft portion (3),
- a shaft at least partially inserted into the hollow shaft portion (3),
- a screw (2), in particular a clamping screw, and
- a clamping ring (70),
wherein the screw (2) has a screw thread and a screw head which rests against a plane bearing surface of the clamping ring (70), which screw head has a largest diameter which is larger than the largest diameter of the screw thread,
wherein the hollow shaft portion (3) has a flattened portion (130), therefore a region with reduced radial wall thickness compared with the radial wall thickness outside of the region and/or with reduced outer radius compared with the wall thickness outside of the region, wherein the screw (2), in particular with its screw thread, at least partially rests against the flattened portion (130),
wherein the screw (2) is spaced apart from the shaft, in particular from the outer surface of the shaft,
**characterized in that**
the hollow shaft portion (3) has an axial slot, in particular an axial slot passing radially through the hollow shaft portion, and the axial course (71-74) of the greatest radial spacing of the clamping ring (70) has a constant region (74) adjoined at both sides by a respective rounded region (73), in particular a circular portion, at whose side remote from the constant region (74) there adjoins a respective linear region (72) in which there runs the greatest radial spacing proportional to the axial position.

2. A clamping connection according to claim 1,
**characterized in that**
the clamping connection has a grub screw (20) for axial securing of the clamping ring (70) on the hollow shaft portion (3),
wherein the grub screw (20) is arranged in a radially directed tapped bore.

3. A clamping connection according to claim 1 or 2,
**characterized in that** the region, in particular circumferential angular region, covered in the circumferential region by the flattened portion (130) encompasses the circumferential angular region covered by the axial slot or at least overlaps therewith,
in particular wherein the axial region covered by the axial slot encompasses the axial region covered by the flattened portion (130) or at least overlaps therewith.

4. A clamping connection according to at least one of the preceding claims 2 and 3,
**characterised in that**
a cutout (40), in particular for balancing, is arranged at the clamping ring (70) and is distanced in the circumferential direction from the grub screw (20) and from the screw (2).

5. A clamping connection according to at least one of the preceding claims,
**characterised in that**
an outer edge of the bearing surface of the clamping ring (70) is defined by the axial course of the greatest radial spacing of the clamping ring (70), wherein the radial outer contour is selected to be radially small to the extent that the regions (71-74) of the axial course come very close to the outermost bearing-surface region still in contact with the lower edge of the screw head and are tangential at a plurality of axial positions (200, 201) or come close with a spacing of less than five tenths of a millimeter.

6. A clamping connection according to at least one of the preceding claims,
**characterised in that**
the clamping ring (70) is a body of revolution whose radially outer surface is predetermined by means of the axial course (71-74) of the greatest radial spacing, wherein the body of revolution has cutouts (40)

7. A clamping connection according to at least one of the preceding claims,
**characterised in that**
the clamping ring (70) has a slot passing through in a radial and axial manner,
wherein the screw thread is at least partially screwed into a tapped bore arranged at that side of the slot of the clamping ring (70) remote from the bearing surface.

8. A drive having a clamping connection according to at least one of the preceding claims,
**characterised in that**
the shaft is a rotor shaft of an electric motor and the hollow shaft portion (3) is connected in a rotationally-fixed manner to the input toothing part of gearing driven by the electric motor.

## Revendications

1. Solidarisation par serrage, comprenant
- un tronçon d'arbre creux (3),
- un arbre inséré au moins partiellement dans ledit tronçon d'arbre creux (3),
- une vis (2), en particulier une vis de serrage, et
- une bague de serrage (70),
la vis (2) comportant un filetage et une tête qui est en applique contre une surface plane d'appui de la bague de serrage (70)
et présente un diamètre maximal supérieur au diamètre maximal du filetage de ladite vis, le tronçon d'arbre creux (3) étant muni d'un méplat (130), c'est-à-dire d'une région présentant une épaisseur de paroi radiale réduite comparativement à l'épaisseur de paroi radiale à l'extérieur de ladite région, et/ou un rayon extérieur réduit comparativement à l'épaisseur de paroi à l'extérieur de ladite région,
sachant que ladite vis (2) est au moins partiellement en applique contre ledit méplat (130), notamment par son filetage,
laquelle vis (2) est située à distance de l'arbre, en particulier de la surface de l'enveloppe dudit arbre,
**caractérisée par le fait que**
le tronçon d'arbre creux (3) comporte une fente axiale, notamment une fente axiale parcourant ledit tronçon d'arbre creux de manière ininterrompue dans le sens radial, et le profil axial (71-74) de l'espacement radial maximal de la bague de serrage (70) présente une région constante (74) à laquelle se rattache, de part et d'autre, une région arrondie (73) respective, en particulier un segment de cercle dont le côté, pointant à l'opposé de ladite région constante (74), fusionne à chaque fois dans une région rectiligne (72) dans laquelle l'espacement radial maximal est proportionnel à l'emplacement axial.

2. Solidarisation par serrage selon la revendication 1,
**caractérisée par le fait que**
ladite solidarisation par serrage est dotée d'une vis (20) sans tête, conçue pour arrêter axialement la bague de serrage (70) sur le tronçon d'arbre creux (3),
ladite vis (20) sans tête étant logée dans un perçage taraudé orienté radialement.

3. Solidarisation par serrage selon la revendication 1 ou 2,
**caractérisée par le fait que**
la région couverte par le méplat (130) dans la direction périphérique, en particulier la plage d'angles circonférentiels, inclut la plage d'angles circonférentiels couverte par la fente axiale, ou est au moins en chevauchement avec ladite plage,
sachant notamment que la région axiale, couverte par ladite fente axiale, inclut ladite région axiale couverte par le méplat (130) ou est au moins en chevauchement avec ladite région.

4. Solidarisation par serrage selon au moins l'une des revendications 2 et 3 précédentes,
**caractérisée par le fait**
**qu'**un évidement (40) pratiqué dans la bague de serrage (70), notamment dévolu à l'équilibrage, est situé à distance de la vis (20) sans tête et de la vis (2) dans la direction périphérique.

5. Solidarisation par serrage selon au moins l'une des revendications précédentes,
**caractérisée par le fait**
**qu'**un bord extérieur de la surface d'appui de la bague de serrage (70) est défini par le profil axial de l'espacement radial maximal de ladite bague de serrage (70), la configuration extérieure radiale étant choisie, dans le sens radial, d'une modicité dimensionnelle telle que les régions (71-74) dudit profil axial se rapprochent très fortement de la région la plus extérieure de ladite surface d'appui, avec laquelle l'arête inférieure de la tête de la vis demeure en contact, et lui sont tangentes en plusieurs emplacements axiaux (200, 201), ou bien s'en rapprochent avec un espacement inférieur à cinq dixièmes de millimètre.

6. Solidarisation par serrage selon au moins l'une des revendications précédentes,
**caractérisée par le fait que**
la bague de serrage (70) est un corps de révolution dont la surface radialement extérieure est préétablie au moyen du profil axial de l'espacement radial maximal, ledit corps de révolution comportant des évidements (40).

7. Solidarisation par serrage selon au moins l'une des revendications précédentes,
**caractérisée par le fait que**
la bague de serrage (70) présente une fente radialement et axialement ininterrompue,
le filetage de la vis étant vissé, au moins en partie, dans un perçage taraudé situé du côté de ladite fente de la bague de serrage (70) qui pointe à l'opposé de la surface d'appui.

8. Entraînement pourvu d'une solidarisation par serrage conforme à au moins l'une des revendications précédentes,
**caractérisé par le fait que**
l'arbre est un arbre rotorique d'un moteur électrique et le tronçon d'arbre creux (3) est relié, avec verrouillage rotatif, à la partie dentée menante d'une transmission entraînée par ledit moteur électrique.
